# FASCICULE DE BREVET EUROPEEN

(11) **EP 2 935 033 B1**
(45) Date de publication et mention de la délivrance du brevet: **05.10.2016**
(21) Numéro de dépôt: 13814108.0
(22) Date de dépôt: 18.12.2013
(51) Int. Cl.: B65D 35/12, B29D 23/20, B29C 45/00

(54) **TUBE SOUPLE**
VERFORMBARE TUBE
FLEXIBLE TUBE

(30) Priorité: 21.12.2012 FR 1262732
(43) Date de publication de la demande: 28.10.2015
(73) Titulaire: Albéa Services, 92230 Gennevilliers (FR)
(72) Inventeur: MAURICE, Thierry, F-51000 Chalons en Champagne (FR); KERMAN, Eric, F-51000 Chalons en Champagne (FR); JAMMET, Jean-Claude, F-80090 Amiens (FR); HERMANT, Etienne, F-51000 Chalons en Champagne (FR)
(74) Mandataire: Gevers & Orès
(86) Numéro de dépôt international: PCT/EP2013/077175
(87) Numéro de publication internationale: WO 2014/096056

(56) Documents cités:
- GB-A- 1 445 609
- GB-A- 2 098 917
- JP-U- S61 103 336

## Description

### DOMAINE TECHNIQUE GENERAL

La présente invention concerne le domaine des tubes souples pour le stockage et la distribution de produits à consistance liquide ou pâteuse, et les procédés de fabrication de tels tubes.

### ETAT DE L'ART

Les tubes souples sont communément constitués d'une tête de tube associée à une jupe, la tête de tube comprenant un goulot pour l'extraction d'un produit contenu dans le tube, tandis que la jupe forme le volume interne du tube adapté pour recevoir un produit.

La jupe est conventionnellement formée d'une feuille multicouche, adaptée pour présenter des propriétés de résistance mécanique et d'étanchéité satisfaisantes.

La tête de tube est en revanche communément réalisée par injection de matériau plastique, ce qui peut s'avérer non satisfaisant pour certaines applications du fait de la nature très agressive de certains produits.

Afin de répondre à cette problématique, plusieurs solutions ont été proposées, comprenant notamment un insert comprenant une couche barrière métallique ou d'EVOH se conformant à la face interne de l'épaule de la tête de tube, de manière à former une barrière séparant la tête de tube en elle-même du produit contenu dans le tube et ainsi la protéger.

Toutefois, bien qu'un tel insert contribue à améliorer les propriétés de la tête de tube, cette dernière présente plusieurs zones ayant des propriétés moindres, notamment en bordure de l'insert, Le document GB 1445609 A, base pour le préambule de la revendication 1, divulgue un tube dans lequel l'extrémité proximale de la jupe comprend des volets incorporés dans la matière formant la tête de tube.

### PRESENTATION DE L'INVENTION

La présente invention vise à proposer un tube ne présentant pas de tels inconvénients.

A cet effet, l'invention propose un tube souple pour produit à consistance liquide ou pâteuse, comprenant :
- une tête de tube comprenant une épaule et un goulot,
- une jupe présentant une extrémité proximale liée à la tête de tube et une extrémité distale libre, la jupe formant un volume interne adaptée pour contenir le produit à consistance liquide ou pâteuse,
caractérisé en ce que l'extrémité proximale de ladite jupe comprend une pluralité de volets et une pluralité d'encoches séparant les volets, lesdits volets étant repliés de manière à recouvrir tout ou partie de l'épaule.

On entend par « recouvrir » ou «recouvrement » le fait de couvrir extérieurement la tête de tube. Autrement dit, les volets sont situés sur une face extérieure de ladite tête de tube.

La présente invention permet ainsi d'exploiter les propriétés de la jupe afin d'améliorer les propriétés mécaniques de la tête de tube, et en particulier son effet barrière pour la protection du produit contenu dans le tube.

Selon un mode de réalisation particulier, lesdits volets sont repliés de manière à couvrir au moins 50% de l'épaule de la tête de tube.

Selon un mode de réalisation particulier, lesdits volets repliés s'étendent sur toute la hauteur du goulot.

Selon un mode de réalisation particulier, la tête de tube comprend en outre un insert disposé en appui contre l'épaule, de manière à former une barrière entre la tête de tube et un produit contenu dans le volume interne défini par la jupe. Autrement dit, l'insert est disposé sur une face intérieure de ladite tête de tube, opposée à ladite face extérieure munie des volets.

L'invention concerne également un procédé de fabrication d'un tube pour produit à consistance liquide ou pâteuse dans lequel
- on positionne une jupe formant un cylindre de révolution autour d'un enfileur, ladite jupe présentant une extrémité proximale et une extrémité distale,
- on fait coulisser la jupe le long dudit enfileur au moyen de butées mobiles muni d'une pluralité d'outils de coupe, de manière à réaliser une pluralité d'encoches à partir de l'extrémité proximale de la jupe, définissant ainsi une pluralité de volets à l'extrémité proximale de la jupe, et de manière à emmancher la jupe autour d'un poinçon ;
- on positionne une matrice autour dudit poinçon, la matrice formant avec le poinçon un logement définissant une forme de tête de tube comprenant une épaule et un goulot, ladite matrice repliant les volets de la jupe de manière à ce qu'ils se conforment à la matrice sur tout ou partie du logement définissant l'épaule ;
- on injecte de la matière plastique dans ledit logement de manière à former la tête de tube.

Selon un mode de réalisation particulier, on positionne un insert sur le poinçon préalablement à l'injection de matière plastique.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 et 2 présentent des vues partielles d'un tube selon un aspect de l'invention.
- Les figures 3 et 4 présentent deux vues d'un mode de réalisation de jupe d'un tel tube.
- Les figures 5, 6, 7 et 8 présentent un exemple d'outillage pour la réalisation d'un tel tube, et un exemple de procédé de réalisation d'un tel tube.

Sur l'ensemble des figures, les éléments en commun sont repérés par des références numériques identiques.

### DESCRIPTION DETAILLEE

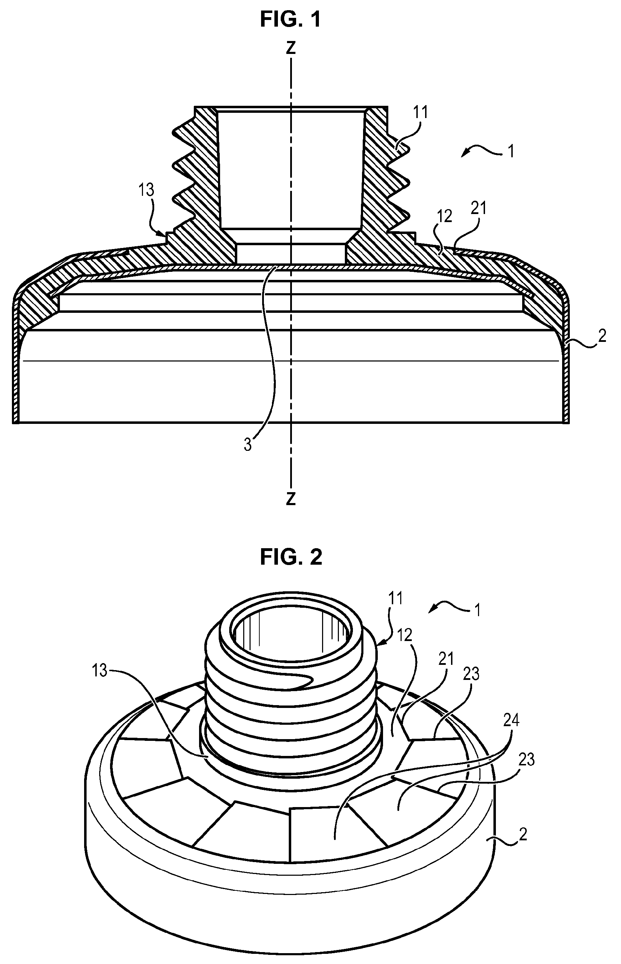

Les figures 1 et 2 présentent des vues partielles d'un tube selon un aspect de l'invention, comprenant
- une tête de tube 1,
- une jupe 2, et
- un insert 3 optionnel.

La tête de tube 1 comprend un goulot 11 définissant un axe longitudinal Z-Z et une épaule 12 s'étendant sensiblement radialement à partir du goulot 11.
On définit ainsi une base 13 du goulot 11, correspondant sensiblement à la jonction entre le goulot 11 ayant une forme générale cylindrique de révolution autour de l'axe Z-Z, et l'épaule 12 s'étendant sensiblement radialement par rapport à l'axe Z-Z à partir du goulot 11.

Le goulot 11 comprend un filetage 14 sur sa périphérie externe, adapté pour permettre de visser un bouchon sur le goulot 11 comprenant un taraudage complémentaire.

La jupe 2 est liée à l'épaule 12, de manière à s'étendre à partir de sa périphérie et à former un volume interne du tube adapté pour recevoir un produit de consistance liquide ou pâteuse.

Le tube tel que présenté comprend en outre un insert 3 disposé en appui contre l'épaule 12, en appui contre une surface interne de l'épaule 12, de manière à former une barrière entre la tête de tube et un produit contenu dans le volume interne.
L'insert 3 tel que présenté est plein, et forme ainsi un opercule obturant le goulot 11. Il peut s'agir d'un insert comprenant une couche barrière, revêtue d'une ou plusieurs couches de protection, notamment en matériaux polymérisés. La couche barrière peut être métallique, notamment en aluminium, ou formée d'EVOH.

Comme représenté sur la figure 2, la jupe 2 présente une extrémité proximale 21 repliée sur une surface externe de l'épaule 12 et plus généralement sur une surface externe de la tête de tube 1. Afin de permettre un tel repli sans générer d'ondulations au niveau de cette extrémité proximale 21 de la jupe 2, cette dernière présente une pluralité d'encoches 23 définissant ainsi une pluralité de volets 24 repliés sur l'épaule 12 de la tête de tube 1.
Les volets 24 ainsi formés recouvrent tout ou partie de l'épaule 12, typiquement au moins 50% de la surface de l'épaule 12.
Selon un mode de réalisation particulier non représenté, les volets 24 sont dimensionnés de manière à s'étendre jusqu'à la base du goulot 12, et recouvrent donc l'intégralité de l'épaule 12. En variante, les volets 24 peuvent également s'étendre sur tout ou partie du goulot 11.

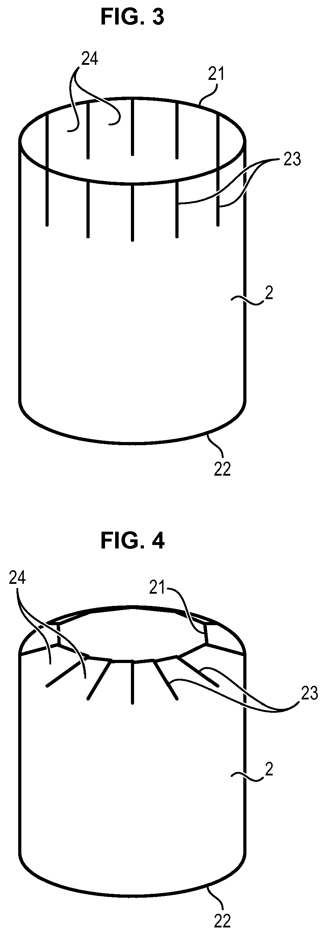

Les figures 3 et 4 présentent deux vues d'un mode de réalisation de jupe 2 telle que présentée précédemment.

La jupe 2 forme un cylindre de révolution, et présente une extrémité proximale 21 et une extrémité distale 22.
L'extrémité proximale 21 présente une pluralité d'encoches 23 comme indiqué précédemment, ces encoches 23 définissant ainsi entre elles une pluralité de volets 24 formés dans le matériau de la jupe 2.

Dans le mode de réalisation représenté, les encoches 23 sont des découpes réalisées à partir de l'extrémité proximale 21 de la jupe 2, sensiblement perpendiculairement à ladite extrémité proximale 21, chacune des encoches 23 ayant avantageusement une longueur identique, et les encoches 23 sont avantageusement réparties régulièrement le long de l'extrémité proximale 21 de la jupe 2. Les encoches 23 s'étendent typiquement parallèlement à l'axe Z-Z, qui correspond à un axe de révolution de la jupe 2.
Les volets 24 ainsi formés sont alors similaires ou identiques.

La figure 4 représente de manière schématique les volets 24 repliés, dans une position correspondant sensiblement à la configuration des volets présentée sur la figure 2. Dans cette configuration, les volets 24 forment un angle non-nul avec le reste de la jupe 2.
On voit sur cette figure que les volets adjacents se recouvrent partiellement du fait de la réduction de diamètre entre le diamètre du cylindre de révolution de la jupe telle que présentée sur la figure 3, et le diamètre interne de la section réduite définie une fois les volets 24 repliés.
On comprend bien qu'en l'absence des encoches 23 réalisées dans la jupe 2, le repli de son extrémité proximale 21 aurait entrainé des ondulations donc une surface irrégulière, dégradant l'aspect de la tête de tube associée ainsi que ses propriétés mécaniques du fait de la forme irrégulière de la jupe qui provoque une injection non contrôlée du matériau formant la tête de tube 1.

La longueur des encoches 23 détermine les dimensions des volets 24, et donc le recouvrement de l'épaule 12 pouvant être réalisé ; des encoches 23 plus longues permettent de recouvrir une surface plus importante de l'épaule 12 tout en évitant des ondulations de la jupe 12. A l'inverse, plus les dimensions des encoches 23 sont faibles, plus la surface de l'épaule 12 pouvant être recouverte par repli de la jupe 2 sera faible.

On comprend bien également que le nombre d'encoches 23 influe également sur la possibilité de replier l'extrémité proximale 21 de la jupe 2 sans former d'ondulations ; plus le nombre d'encoches 23 est important, plus les dimensions des volets 24 sont faibles, et donc plus il est possible de les replier vers l'intérieur de la jupe 2 comme représenté sur la figure 4 sans former des ondulations.

Les encoches 23 peuvent également être réalisées de plusieurs manières. Il peut s'agir de simples découpes sans enlèvement de matière comme représenté sur la figure 3, ou des découpes réalisant un enlèvement de matière, par exemple d'une portion ayant une forme triangulaire dont la base est formée par l'extrémité proximale 21 de la jupe 2 ; la forme de telles découpes étant configurée en fonction des dimensions de la jupe 2 et de la tête de tube 1, et du recouvrement par la jupe 2 recherché.

A titre d'exemple, on indique les variantes non limitatives suivantes :
- le diamètre de la jupe 2 peut varier entre 19 et 50mm,
- pour une jupe 2 ayant un diamètre de 25mm, le nombre d'encoches peut varier entre 12 et 32 encoches,
- la largeur des encoches au niveau de l'extrémité proximale de la jupe varie typiquement entre 2mm et 6mm,
- le recouvrement est typiquement compris entre 0,2mm et 1mm.

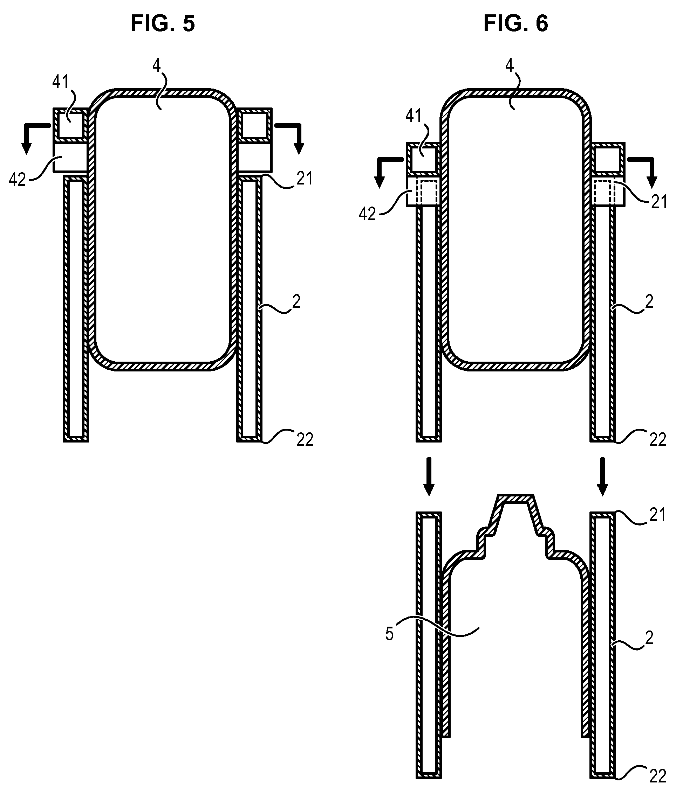

Les figures 5, 6, 7 et 8 présentent un exemple d'outillage pour la réalisation d'un tel tube, et un exemple de procédé de réalisation d'un tel tube.

La figure 5 présente une jupe 2 montée sur un élément d'outillage communément appelé enfileur 4. Cet enfileur 4 a par exemple une forme cylindrique de révolution de manière à pouvoir emmancher la jupe 2 autour, et comprend des butées mobiles 41 mobiles selon sa longueur, de manière à ce que lors de leur déplacement, elles fassent coulisser la jupe 2 le long de l'enfileur 4.
Ces butées mobiles 41 sont en outre munies d'outils de coupe 42 répartis autour de la périphérie de l'enfileur 41, de sorte que lors du déplacement des butées mobiles 41 le long de l'enfileur 4, les outils de coupe 42 vont dans un premier temps entrer au contact avec la jupe 2, et ainsi réaliser des encoches à partir de son extrémité proximale 21. Une fois que ces encoches sont réalisées et que des volets sont formés tels que décrits précédemment, ces volets viennent en butée contre les butées mobiles, qui entraînent alors la jupe 2 en déplacement le long de l'enfileur 4.

La figure 6 présente ainsi la position des butées mobiles 41 une fois les encoches réalisées au niveau de l'extrémité proximale 21 de la jupe 2 ; les butées mobiles poussent la jupe 2 de manière à venir l'emmancher autour d'un poinçon 5.

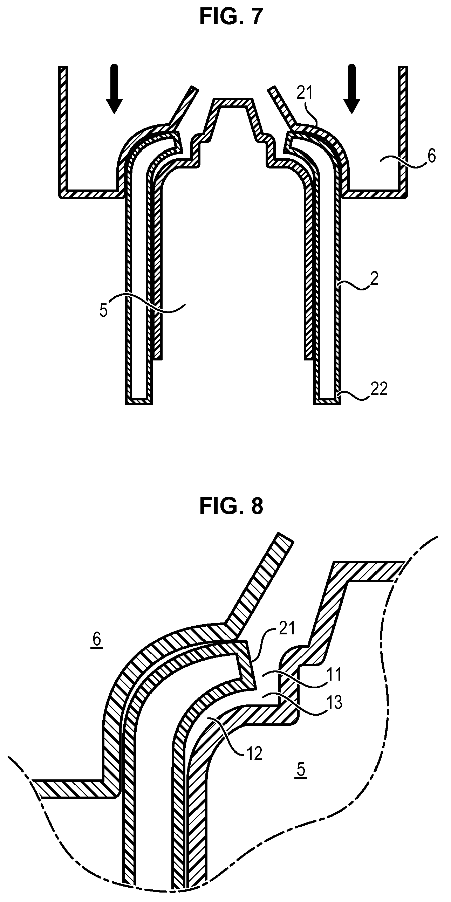

Les figures 7 et 8 présentent le positionnement d'une matrice 6 vis-à-vis du poinçon 5, la matrice 6 et le poinçon 5 définissant entre eux un volume interne définissant la forme de la tête de tube que l'on souhaite réaliser ; on repère ainsi sur la figure 8 la forme de l'épaule 12 et le goulot 11 d'une tête de tube telle que définie précédemment.

Comme représenté sur les figures, le positionnement de la matrice 6 provoque le repli de l'extrémité proximale 21 de la jupe 2, de manière à ce qu'elle se conforme sensiblement à la forme de la matrice 6 définissant l'épaule 12 et le cas échéant le goulot 11.

On injecte ensuite de la matière plastique pour former la tête de tube dans le volume interne défini par le poinçon 5 et la matrice 6. La matière plastique ainsi injectée va alors se lier avec la jupe 2, assurant la cohésion entre la jupe 2 et la tête de tube 1.

En variante, on positionne un insert 3 sur le poinçon 5 préalablement au positionnement de la jupe 2 ou préalablement au positionnement de la matrice 6, permettant ainsi de lier la tête de tube 1 à l'insert 3 lors de sa fabrication.

La présente invention permet ainsi d'exploiter les propriétés de la jupe 2 afin d'améliorer les propriétés mécaniques de la tête de tube 1.
En outre, dans le cas d'une tête de tube 1 comprenant un insert 3, l'invention permet d'améliorer les propriétés de la tête de tube 1 en réduisant fortement la perméabilité en bordure de l'insert 3.

## Revendications

1. Tube souple pour produit à consistance liquide ou pâteuse, comprenant :
- une tête de tube (1) comprenant une épaule (12) et un goulot (11),
- une jupe (2) présentant une extrémité proximale (21) liée à la tête de tube (1) et une extrémité distale (22) libre, la jupe (2) formant un volume interne adaptée pour contenir un produit à consistance liquide ou pâteuse,
**caractérisé en ce que** l'extrémité proximale (21) de ladite jupe (2) comprend une pluralité de volets (24) et une pluralité d'encoches (23) séparant lesdits volets (24), lesdits volets (24) étant repliés de manière à recouvrir tout ou partie de l'épaule (12).

2. Tube selon la revendication 1, dans lequel lesdits volets (24) sont repliés de manière à couvrir au moins 50% de l'épaule (12) de la tête de tube (1).

3. Tube selon l'une des revendications 1 ou 2, dans lequel lesdits volets (24) repliés s'étendent sur toute la hauteur du goulot (11).

4. Tube selon l'une des revendications 1 à 3, dans lequel la tête de tube (1) comprend en outre un insert (3) disposé en appui contre l'épaule (12), de manière à former une barrière entre la tête de tube (1) et un produit contenu dans le volume interne défini par la jupe (2).

5. Procédé de fabrication d'un tube pour produit à consistance liquide ou pâteuse dans lequel
- on positionne une jupe (2) formant un cylindre de révolution autour d'un enfileur (4), ladite jupe (2) présentant une extrémité proximale (21) et une extrémité distale (22),
- on fait coulisser la jupe (2) le long dudit enfileur (4) au moyen de butées mobiles (41) muni d'une pluralité d'outils de coupe (42), de manière à réaliser une pluralité d'encoches (23) à partir de l'extrémité proximale (21) de la jupe (2), définissant ainsi une pluralité de volets (24) à l'extrémité proximale (21) de la jupe (2), et de manière à emmancher la jupe (2) autour d'un poinçon (5) ;
- on positionne une matrice (6) autour dudit poinçon (5), la matrice (6) formant avec le poinçon (5) un logement définissant une forme de tête de tube (1) comprenant une épaule (12) et un goulot (11), ladite matrice (6) repliant les volets (24) de la jupe (2) de manière à ce qu'ils se conforment à la matrice (6) sur tout ou partie du logement définissant l'épaule (12) ;
- on injecte de la matière plastique dans ledit logement de manière à former la tête de tube (1).

6. Procédé selon la revendication 5, dans lequel on positionne un insert (3) sur le poinçon (5) préalablement à l'injection de matière plastique.

## Patentansprüche

1. Flexible Tube für ein Produkt mit flüssiger oder pastöser Konsistenz, umfassend:
- einen Tubenkopf (1), der eine Schulter (12) und einem Hals (11) umfasst,
- eine Schürze (2), die ein proximales Ende (21), das mit dem Tubenkopf (1) verbunden ist, und ein freies distales Ende (22) aufweist, wobei die Schürze (2) ein Innenvolumen bildet, das eingerichtet ist, ein Produkt mit flüssiger oder pastöser Konsistenz aufzunehmen,
**dadurch gekennzeichnet, dass** das proximale Ende (21) der Schürze (2) mehrere Klappen (24) und mehrere Einkerbungen (23) umfasst, welche die Klappen (24) trennen, wobei die Klappen (24) gefaltet sind, um die gesamte oder einen Teil der Schulter (12) zu bedecken.

2. Tube nach Anspruch 1, wobei die Klappen (24) so gefaltet sind, dass sie mindestens 50 % der Schulter (12) des Tubenkopfes (1) bedecken.

3. Tube nach einem der Ansprüche 1 oder 2, wobei sich die gefalteten Klappen (24) über die gesamte Höhe des Halses (11) erstrecken.

4. Tube nach einem der Ansprüche 1 bis 3, wobei der Tubenkopf (1) ferner einen Einsatz (3) aufweist, der in Anlage gegen die Schulter (12) angeordnet ist, um eine Barriere zwischen dem Tubenkopf (1) und einem Produkt (2), das in dem Innenvolumen enthalten ist, das durch die Schürze (2) definiert ist, zu bilden.

5. Verfahren zur Herstellung einer Tube für ein Produkt mit einer flüssigen oder pastösen Konsistenz, wobei
- eine Schürze (2) positioniert wird, die einen Rotationszylinder um einen Einfädler (4) bildet, wobei die Schürze (2) ein proximales Ende (21) und ein distales Ende (22) aufweist,
- die Schürze (2) entlang des Einfädlers (4) mittels beweglicher Anschläge (41) gleiten gelassen wird, die mit mehreren Schneidwerkzeugen (42) ausgestattet sind, um mehrere Einkerbungen (23) ausgehend von dem proximalen Ende (21) der Schürze (2) zu realisieren, wodurch mehrere Klappen (24) am proximalen Ende (21) der Schürze (2) definiert sind, und um so die Schürze (2) um einen Stempel (5) aufzusetzen;
- eine Matrix (6) um den Stempel (5) positioniert wird, wobei die Matrix (6) mit dem Stempel (5) ein Gehäuse bildet, das eine Form des Tubenkopfs (1) definiert, der eine Schulter (12) und einen Hals (11) umfasst, wobei die Matrix (6) die Klappen (24) der Schürze (2) so faltet, dass sie an die Matrix (6) über das gesamte oder einen Teil des Gehäuses angepasst sind, welches die Schulter (12) definiert;
- Kunststoffmaterial wird in das Gehäuse eingespritzt, um den Tubenkopf (1) zu bilden.

6. Verfahren nach Anspruch 5, wobei ein Einsatz (3) auf dem Stempel (5) vor der Einspritzung von Kunststoff positioniert wird.

## Claims

1. Flexible tube for a product with a liquid or pasty consistency, comprising:
- a tube head (1) comprising a shoulder (12) and a neck (11),
- a skirt (2) having a proximal end (21) which is connected to the tube head (1) an a free distal end (22), the skirt (2) forming an internal volume which is adapted to contain a product having a liquid or pasty consistency,
**characterised in that** the proximal end (21) of said skirt (2) comprises a plurality of flaps (24) and a plurality of notches (23) separating said flaps (24), said flaps (24) being folded so as to cover all or part of the shoulder (12).

2. Tube according to claim 1, wherein said flaps (24) are folded so as to cover at least 50% of the shoulder (12) of the tube head (1).

3. Tube according to any one of claims 1 or 2, wherein said folded flaps (24) extend over the entire height of the neck (11).

4. Tube according to any one of claims 1 to 3, wherein the tube head (1), further comprises an insert (3) which is arranged so as to rest against the shoulder (12), so as to form a barrier between the tube head (1) and a product contained in the internal volume defined by the skirt (2).

5. Method for manufacturing a tube for a product having a liquid or pasty consistency, wherein
- a skirt (2) forming a cylinder of revolution is positioned around a threader (4), said skirt (2) having a proximal end (21) and a distal end (22),
- the skirt (2) is slipped along said threader (4) by means of moveable stops (41) provided with a plurality of cutting tools (42), so as to produce a plurality of notches (23) from the proximal end (21) of the skirt (2), thus defining a plurality of flaps (24) at the proximal end (21) of the skirt (2), so as to fit the skirt (2) around a punch (5);
- a die (6) is positioned around said punch (5), the die (6) forming a recess together with the punch (5) which defines a shape of the tube head (1) comprising a shoulder (12) and a neck (11), said die (6) folding the flaps (24) of the skirt (2) such that they are shaped to the die (6) over all or part of the recess defining the shoulder (12);
- plastic material is injected into said recess so as to form the tube head (1).

6. Method according to claim 5, wherein an insert (3) is positioned on the punch (5) prior to the injection of plastic material.
